## Europäisches Patentamt

## European Patent Office

## Office européen des brevets

(11) Veröffentlichungsnummer: **0 223 984**
**B1**

(12) **EUROPÄISCHE PATENTSCHRIFT**

(45) Veröffentlichungstag der Patentschrift:
07.02.90

(51) Int. Cl.⁴: **G11B 5/31**

(21) Anmeldenummer: 86113798.2

(22) Anmeldetag: 06.10.86

(54) Dünnfilm-Magnetkopf mit Haupt- und Hilfspol zur senkrechten Magnetisierung.

(30) Priorität: 18.10.85 DE 3537181

(43) Veröffentlichungstag der Anmeldung:
03.06.87 Patentblatt 87/23

(45) Bekanntmachung des Hinweises auf die Patenterteilung:
07.02.90 Patentblatt 90/6

(84) Benannte Vertragsstaaten:
DE FR GB

(56) Entgegenhaltungen:
IBM TECHNICAL DISCLOSURE BULLETIN, Band 26,
Nr. 1, Juni 1983, Seiten 354-356, Armonk, N.Y., US; A.W.
VINAL: "Single-track magnetic read/write head
structure"
PATENTS ABSTRACTS OF JAPAN, Band 7,
Nr. 30 (P-173)[1175], 5. Februar 1983; &
JP-A-57 183 618 (FUJITSU K.K.) 12-11-1982
PATENTS ABSTRACTS OF JAPAN, Band 4,
Nr. 78 (P-14)[560], 6. Juni 1980; & JP-A-55 42 352 (SUWA
SEIKOSHA K.K.) 25-03-1980
PATENTS ABSTRACTS OF JAPAN, Band 7,
Nr. 270 (P-240)[1415], 2. Dezember 1983; &
JP-A-58 150 121 (RICOH K.K.) 06-09-1983

(73) Patentinhaber: Siemens Aktiengesellschaft,
Wittelsbacherplatz 2, D-8000 München 2(DE)

(72) Erfinder: Diepers, Heinrich, Dr., Veit-Stoss-Strasse 44,
D-8552 Höchstadt(DE)
Erfinder: Schewe. Herbert, Dr., Haydnstrasse 48,
D-8522 Herzogenaurach(DE)

ACTORUM AG

## Beschreibung

Die Erfindung bezieht sich auf einen Dünnfilm-Magnetkopf mit schichtweisem Aufbau auf einem nicht-magnetischen Substrat für ein Aufzeichnungsmedium, das eine magnetisierbare Speicherschicht enthält, in welche längs einer Spur Informationen durch senkrechte (vertikale) Magnetisierung einzuschreiben sind, welcher Magnetkopf

– einen den magnetischen Fluß führenden magnetischen Leitkörper aufweise dessen dem Aufzeichnungsmedium zugewandte, einen Haupt- und einen Hilfspol bildende Endstück seiner Magnetschenkel mit vorbestimmtem Abstand nebeneinander auf einer Flachseite des Substrates angeordnet sind, deren Normale zumindest annähernd parallel zur Längsrichtung der Spur ausgerichtet ist,
– und mit mindestens einer Schreib-/Lesespulenwicklung versehen ist, deren Leiterwindungen sich durch einen zwischen den Magnetschenkeln ausgebildeten Zwischenraum erstrecken.

Ein solcher Magnetkop ist z.B. aus der EP 0 146 003 A1 zu entnehmen.

Das Prinzip der senkrechten Magnetisierung zur Speicherung von Informationen ist allgemein bekannt (vgl. z.B. "IEEE Transactions on Magnetics", vol. MAG-16, no. 1, Januar 1980, Seiten 71 bis 76 oder die genannte EP-A1).

Für dieses Prinzip, das vielfach auch als vertikale Magnetisierung bezeichnet wird, sind spezielle Schreib-/Lese-Magnetköpfe erforderlich. Ein hierfür geeigneter Kopf weist im allgemeinen zur Führung des magnetischen Flusses einen auf einem ebenen, nicht-magnetischen Substrat aufgebrachten Leitkörper aus einem magnetisierbaren Material mit insbesondere ringkopfähnlicher Gestalt auf. Ein solcher magnetischer Leitkörper kann beispielsweise zwei Magnetschenkel umfassen, die dem Aufzeichnungsmedium zugewandt sind, wobei einer von diesen einen Hauptpol bildet, mit dem ein hinreichend starkes senkrechtes Magnetfeld zum Ummagnetisieren der Speicherschicht zu erzeugen ist. Der notwendige magnetische Rückschluß kann dann mit Hilfe des anderen Magnetschenkels vorgenommen werden, der insbesondere einen sogenannten Hilfspol bildet.

Bei Magnetköpfen von diesem Kopftyp soll der Hilfspol nur zur magnetischen Flußrückführung dienen. Ein eventuelles Mitschreiben dieses Hilfspoles kann gegebenenfalls sogar in Kauf genommen werden, da der schreibende Hauptpol so angeordnet werden kann, daß er vom Hilfspol eventuell geschriebene Informationen später überschreibt. Um jedoch ein Mitlesen des Hilfspoles mit seiner ablaufenden Kante zumindest weitgehend zu unterbinden, müßte der zwischen den beiden Polen ausgebildete Abstand verhältnismäßig breit sein, um so eine weitgehende Reduzierung der magnetischen Flußdichte am Hilfspol gewährleisten zu können. Bei Magnetköpfen mit in Bewegungsrichtung des Kopfes gesehen hintereinander angeordneten Magnetpolen ist jedoch eine diesen Abstand ausfüllende Spaltschicht insbesondere in Dünnfilm-Technik außerordentlich schwierig herzustellen.

Aus diesem Grunde sind bei dem aus der eingangs genannten EP-A1 zu entnehmen Magnetkopf die beiden Pole der Magnetschenkel nicht in Bewegungsrichtung gesehen hintereinanderliegend, sondern nebeneinanderliegend angeordnet. Dann lassen sich nämlich die beiden Magnetschenkel sowie die Windungen mindestens einer Schreib-/Lesespulenwicklung in Dünnfilm-Technik verhältnismäßig einfach auf dem nicht-magnetischen Substratkörper aufbringen. Entsprechende Techniken sind allgemein bekannt (vgl. z.B. "Feinwerktechnik und Meßtechnik", 88. Jg., Heft 2, März 1980, Seiten 53 bis 59, oder "Siemens-Zeitschrift", Band 52, Heft 7, 1978, Seiten 434 bis 437). Hierbei lassen sich die beiden Pole auch verhältnismäßig weit voneinander beabstandet anordnen, so daß gegebenenfalls sogar auf die Ausbildung besonderer Spaltschichten zwischen diesen Polen verzichtet werden kann.

Der magnetische Leitkörper des aus der EP-A1 bekannten Magnetkopfes umfaßt neben den beiden im wesentlichen senkrecht bezüglich des Aufzeichnungsmediums ausgerichteten Magnetschenkeln mit dem Haupt- bzw. Hilfspol noch einen besonderen, dazu quer verlaufenden Verbindungsschenkel. Dieser als magnetischer Rückschluß zwischen den beiden Magnetschenkeln dienende Verbindungsschenkel soll dabei aus einem magnetischen Material bestehen, dessen leichte Magnetisierung im wesentlichen senkrecht zur leichten Magnetisierung in den Magnetschenkeln gerichtet ist. Die Ausbildung eines entsprechenden magnetischen Leitkörpers ist jedoch verhältnismäßig aufwendig.

Außerdem sollen bei dem bekannten Magnetkopf die Leiterwindungen der Schreib-/Lesespulenwicklung außerhalb des Bereiches des verhältnismäßig ausgedehnten Hilfspoles nur um den Verbindungsbereich verlaufen, der zwischen dem Verbindungsschenkel und dem Magnetschenkel des Hauptpoles ausgebildet ist. Eine derartige Anordnung macht jedoch eine entsprechende Breite der den magnetischen Leitkörper und die Spulenwicklung aufnehmenden Flachseite eines Substrates erforderlich. Das Substrat ist dabei Teil eines sogenannten Flugkörpers, an dessen dem Aufzeichnungsmedium zugewandten Unterseite mindestens eine Flugkufe ausgebildet ist. Die Stirnseite dieser Flugkufe stellt dann die für die Aufnahme des Magnetkopfes zur Verfügung stehende Flachseite dar. Soll nun bei einem Festplattenspeicher die Flughöhe des Magnetkörpers über dem Aufzeichnungsmedium äußerst gering gehalten werden und insbesondere weniger als 0,3 μm betragen, so ist aus aerodynamischen Gründen die Breite der Flugkufe auf wenige 100 μm, beispielsweise unter 600 μm begrenzt (vgl. auch Figur 1). Dann läßt sich jedoch ein Aufbau gemäß dem aus der EP-A1 bekannten Magnetkopfes auf einer derartig schmalen Flachseite nur schwer realisieren.

Aufgabe der vorliegenden Erfindung ist es deshalb, den Dünnfilm-Magnetkopf der eingangs genannten Art dahingehend zu verbessern, daß er auch für einen Festplattenspeicher mit einer Flughöhe der erwähnten Größenordnung auf verhältnismäßig einfache Weise in Dünnschicht-Technik realisierbar ist.

Diese Aufgabe wird erfindungsgemäß dadurch gelöst, daß als magnetischer Leitkörper nur die sich teilweise überlappenden Magnetschenkel vorgesehen sind, die in ihrer gemeinsamen Überlappungszone

- unter Ausbildung eines magnetischen Rückschlusses in einem Teilbereich aneinandergefügt und
- außerhalb dieses Rückschlußbereiches unter Ausbildung des Zwischenraumes für die Stromleiter der Wicklung beabstandet sind.

Die mit dieser Ausgestaltung des Magnetkopfes verbundenen Vorteile sind insbesondere darin zu sehen, daß nunmehr auch ein Teil des von dem verhältnismäßig ausgedehnten Magnetschenkel mit dem Hilfspol eingenommenen Bereiches auf dem Substratkörper zur Anordnung der Leiterwindungen der Spulenwicklung zur Verfügung steht. Es läßt sich somit ein verhältnismäßig kompakter Aufbau bei dennoch verhältnismäßig großem Abstand zwischen Haupt- und Hilfspol gewährleisten. Darüber hinaus ist ein besonderer Verbindungsschenkel zwischen den beiden Magnetschenkeln des Haupt- bzw. Hilfspoles mit spezieller Magnetisierungsrichtung nicht erforderlich. Der erfindungsgemäße Magnetkopf läßt sich deshalb verhältnismäßig einfach in Dünnschicht-Technik erstellen.

Vorteilhafte Ausgestaltungen des Magnetkopfes nach der Erfindung gehen aus den Unteransprüchen hervor.

Zur weiteren Erläuterung der Erfindung wird auf die schematische Zeichnung Bezug genommen. Dabei ist in Figur 1 die Anordnung eines bekannten Magnetkopfes auf einem bekannten Flugkörper angedeutet. Figur 2 zeigt einen Magnetkopf nach der Erfindung in Aufsicht, von dem in den Figuren 3 und 4 jeweils einen Querschnitt dargestellt ist. In den Figuren 5 und 6 ist eine zweite Ausführungsform eines erfindungsgemäßen Magnetkopfes als Querschnitte veranschaulicht, während die Figuren 7 und 8 eine weitere Ausbildungsmöglichkeit eines Magnetkopfes nach der Erfindung in Aufsicht bzw. Schrägansicht zeigen. In den Figuren sind übereinstimmende Teile mit den gleichen Bezugszeichen versehen.

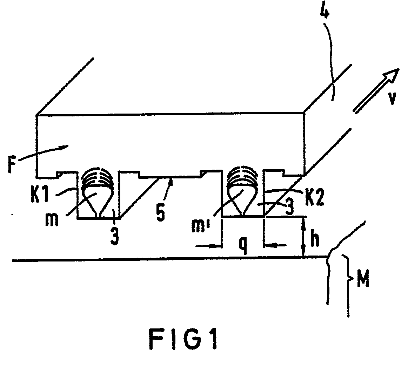

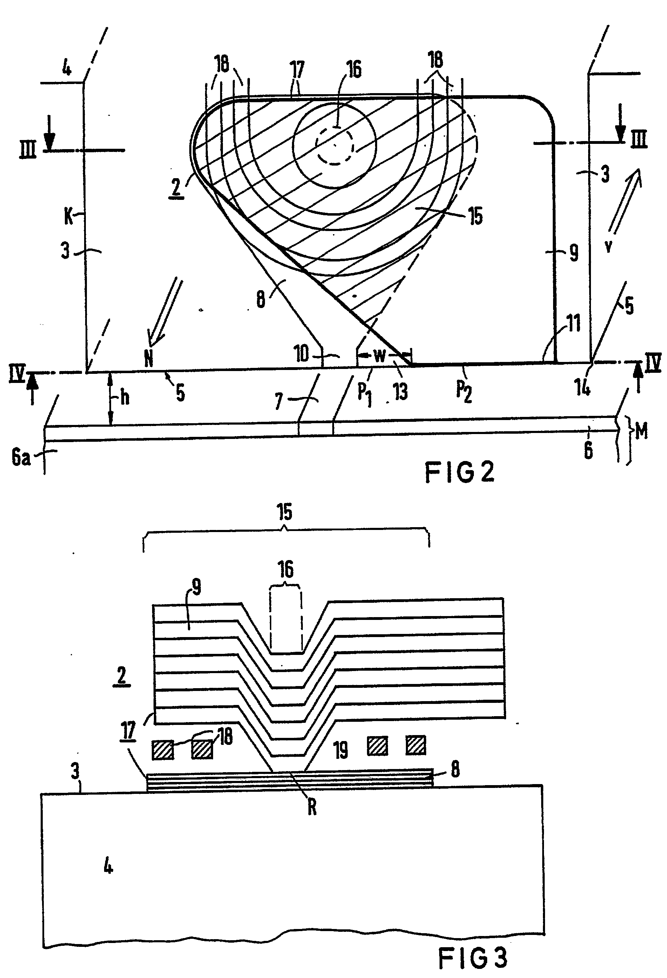

In Figur 1 ist schematisch in Schrägansicht die Flachseite F eines Teilstückes eines Substrates 4 ersichtlich. Diese Flachseite bildet die Stirnseite oder insbesondere die Rückseite eines gebräuchlichen, auch als Flugkörper bezeichneten Elementes. Auf der Flachseite F sind zwei Magnetköpfe m und m' angeordnet. Diese in der Figur nicht näher ausgeführten Köpfe sind an sich bekannt (vgl. z.B. die EP 0 012 910 A1 oder 0 012 912 A1). Einer der Magnetköpfe, z.B. der Kopf m, dient zur vertikalen Magnetisierung eines entsprechenden Aufzeichnungsmediums M, wobei er in nur geringer Flughöhe h über diesem Medium zu führen ist. Der andere Magnetkopf m' ist nur aus fertigungstechnischen Gründen vorgesehen und übt keine Funktion aus. Die relative Bewegungsrichtung des Aufzeichnungsmediums M bezüglich des Magnetkopfes m ist durch eine mit v bezeichnete gepfeilte Linie angedeutet. Um eine Flughöhe h von beispielsweise etwa 0,2 μm gewährleisten zu können, ist aus aerodynamischen Gründen die dem Aufzeichnungsmedium M zugewandte Unterseite 5 des Substrates 4 so strukturiert, daß mindestens zwei Flugkufen K1 und K2 mit jeweils rechteckigem Querschnitt ausgebildet sind. Auf den von diesen Kufen eingenommenen Teilbereichen 3 der Flachseite F sind die beiden Magnetköpfe m und m' aufgebracht. Da die Querausdehnung q der Bereiche 3 auf wenige 100 μm begrenzt ist, ergeben sich die erwähnten Schwierigkeiten, falls man dort die aus der EP 0 146 003 A1 bekannten Magnetköpfe anordnen will. Diese Schwierigkeiten bestehen bei dem in Figur 2 gezeigten Magnetkopf nach der Erfindung zumindest weitgehend nicht.

Mit dem in Figur 2 schematisch gezeigten Magnetkopf nach der Erfindung soll sowohl eine Schreib- als auch eine Lese-Funktion gemäß dem Prinzip der senkrechten (vertikalen) Magnetisierung auszuüben sein. Dieser als Aufsicht dargestellte Kopf, der allgemein mit 2 bezeichnet ist, befindet sich dabei auf der Flachseite 3 des in Figur 1 gezeigten Substrates 4 im Bereich einer der Flugkufen K. Mit dem Magnetkopf 2 ist eine Speicherschicht 6 eines Aufzeichnungsmediums M längs einer Spur 7 vertikal zu magnetisieren. Diese Speicherschicht besteht z.B. aus einer CoCr-Legierung mit vertikaler Orientierung und befindet sich im allgemeinen auf einer weichmagnetischen Unterlage 6a, z.B. aus einer NiFe-, CoZr- oder CoHf-Legierung.

Der Magnetkopf 2 weist zwei Magnetschenkel 8 und 9 auf, die an ihren dem Aufzeichnungsmedium M zugewandten Enden 10 bzw. 11 zumindest annähernd senkrecht zur Oberfläche des Aufzeichnungsmediums ausgerichtet sind und dort einen magnetischen Hauptpol $P_1$ bzw. einen magnetischen Hilfspol $P_2$ bilden. Die Magnetschichten der Schenkel weisen dabei eine uniaxiale magnetische Anisotropie auf, wobei die Vorzugsachsen der Magnetisierung parallel zur Speicherschicht 6 und senkrecht zur Bewegungsrichtung v orientiert sind. Zwischen den beiden Schenkelenden 10 und 11 ist ein Luftspalt 13 mit einer vorbestimmten, vorteilhaft verhältnismäßig großen Weite w ausgebildet. Die Magnetpole $P_1$ und $P_2$ sind somit in Bewegungsrichtung v gesehen nebeneinander angeordnet; d.h., die sie tragende Substratflachseite 3 mit der zwischen ihr und der Substratunterseite 5 gebildeten Flugkörperkante 14 soll so ausgerichtet und geführt werden, daß die Normale N auf der Flachseite 3 parallel zur Bewegungsrichtung v bzw. zur Längsrichtung der Spur 7 in einer zur Oberfläche des Aufzeichnungsmediums M parallelen Ebene liegt.

Gemäß dem angenommenen Ausführungsbeispiel befinden sich der gesamte, den Hauptpol $P_1$ bildende Magnetschenkel 8, der Magnetschenkel 9 jedoch im wesentlichen nur mit seinem den Hilfspol $P_2$ bildenden Ende 11 unmittelbar auf der Substratfläche 3. Nach der Erfindung ist außerdem der Magnetschenkel 9 derart ausgeführt, daß er auf seiner dem Hilfspol $P_2$ abgewandten Seite den Magnetschenkel 8 überlappt. Die mit 15 bezeichnete Überlappungszone ist in der Figur durch eine Schraffur angedeutet. In dieser Zone 15 ist der Magnetschenkel 9 lediglich in einem Teilbereich 16 unmittelbar an den Magnetschenkel 8 angefügt, so daß dort ein magnetischer Rückschluß R zwischen diesen beiden Schenkeln besteht und sich somit ein magnetischer Leitkörper 17 mit etwa ringkopfähnlicher Gestalt ergibt. Außerhalb des Rückschlußbereiches 16 sind hingegen die beiden Magnetschenkel 8 und 9 so weit beabstandet, daß sich durch den damit ausgebildeten Zwischenraum zwischen diesen beiden Schenkeln die Leiterwindungen 18 einer Schreib-/Lesespulenwicklung erstrecken können. In der Figur sind der Übersichtlichkeit wegen nur zwei dieser Windungen angedeutet, die den magnetischen Rückschlußbereich 16 halbkreisförmig umschließen.

Dieser Aufbau des erfindungsgemäßen Magnetkopfes nach Figur 2 ist insbesondere auch aus dem Schnitt erkennbar, der entlang der in der Figur mit III-III bezeichneten und durch den magnetischen Rückschlußbereich 16 verlaufenden Schnittlinie gelegt und in Figur 3 wiedergegeben ist. Aus dieser Figur geht insbesondere die Ausbildung des magnetischen Rückschlußbereiches 16 sowie des die Leiterwindungen 18 der Spulenwicklung aufnehmenden und mit 19 bezeichneten Zwischenraums zwischen den Magnetschenkeln 8 und 9 hervor. Außerdem ist der schichtweise Aufbau des Magnetkopfes 2 verdeutlicht, der bei der Nebeneinander-Anordnung der beiden Magnetpole $P_1$ und $P_2$ nach bekannten Verfahren (vgl. z.B. die eingangs genannte EP-A1) verhältnismäßig einfach in Dünnfilm-Technik durchzuführen ist. Dabei sind die Magnetschichten, die den Haupt- und Hilfspol bilden, vorzugsweise lamelliert und können aus speziellen Ni-Fe-Legierungen (z.B. aus "Permalloy"- eingetragenes Warenzeichen der "Western Electric Co.") oder aus amorphen Materialien wie z.B. CoZr oder CoHf bestehen.

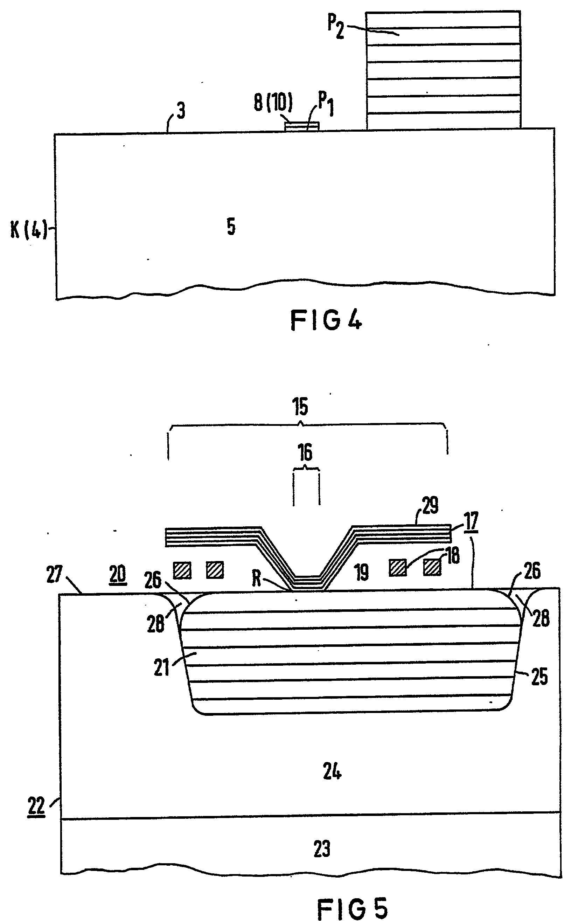

Figur 4 zeigt schematisch einen weiteren Querschnitt durch den in Figur 2 gezeigten Magnetkopf 2. Dieser Schnitt ist entlang einer in Figur 2 mit IV-IV bezeichnete Linie gelegt. In der Schnittebene befinden sich die dem Aufzeichnungsmedium zugewandten Enden der beiden Magnetpole $P_1$ und $P_2$ sowie die zu einer Flugkufe K gestaltete Unterseite 5 des Substrates 4. Wie aus dieser Figur deutlich hervorgeht, ist die sichtbare Fläche des Hilfspoles $P_2$ wesentlich größer, vorzugsweise mindestens 10-mal größer als die des Hauptpoles $P_1$.

Gemäß dem Ausführungsbeispiel des in den Figuren 2 bis 4 schematisch gezeigten Magnetkopfes 2 wurde davon ausgegangen, daß auf einer ebenen Flachseite 3 des Substrates 4 der schichtweise Aufbau des Kopfes vorgenommen werden soll. Wie jedoch in Figur 5 angedeutet ist, kann man auch einen der beiden Magnetschenkel zumindest im Bereich seines den jeweiligen Magnetpol ausbildenden Endes versenkt in dem Substrat ausbilden. Aus dieser Figur ist schematisch ein Querschnitt durch einen Magnetkopf 20 ersichtlich, wobei der Schnitt entsprechend dem Schnitt III-III der Figur 3 durch den magnetischen Rückschlußbereich 16 seiner beiden Magnetschenkel gelegt ist. Bei dem Magnetkopf 20 ist sein den Hilfspol bildender Magnetschenkel 21 in dem Substrat 22 versenkt angeordnet. Hierbei ist angenommen, daß der eigentliche Substratkörper 23 aus einem elektrisch leitenden Material wie z.B. aus mit $Al_2O_3$ angereichertem TiC besteht und somit eine Isolationsschicht 24, z.B. aus $Al_2O_3$ erforderlich ist. Der Magnetschenkel 21 ist also in einer entsprechenden Vertiefung 25 dieser Schicht 24 eingebracht. Die Vertiefung kann z.B. durch Ätzen, z.B. Ionenstrahlätzen, oder durch Sägen oder durch Kombination verschiedener an sich bekannter Techniken hergestellt werden. Dabei ist es in jedem Fall von Vorteil, wenn die Kanten 26 dieses Magnetschenkels zumindest im Bereich des Polendes, vorzugsweise auch in den anderen Bereichen verrundet werden. Eine derartige Verrundung ergibt sich insbesondere beim Ionenstrahlätzen. Werden die Magnetschichten des Schenkels 21 so strukturiert, dann ergeben sich zwischen diesem Schenkel und der Substratoberfläche bzw. -flachseite 27 zwickelartige Gräben 28, die gegebenenfalls in an sich bekannter Weise eingeebnet werden. Auf die so eingeebnete Oberfläche werden dann entsprechend der Herstellung des Magnetkopfes 2 zunächst die einzelnen Leiterwindungen 18 der Schreib-/Lesespulenwicklung aufgebracht, wobei ein Bereich 16 für den vorgesehenen magnetischen Rückschluß R freigehalten bzw. freigelegt wird. Anschließend werden dann die Schichten des den Hauptpol bildenden Magnetschenkels 29 abgeschieden, die in dem Rückschlußbereich 16 unmittelbar an dem den Hilfspol ausbildenden Magnetschenkel 21 anliegen.

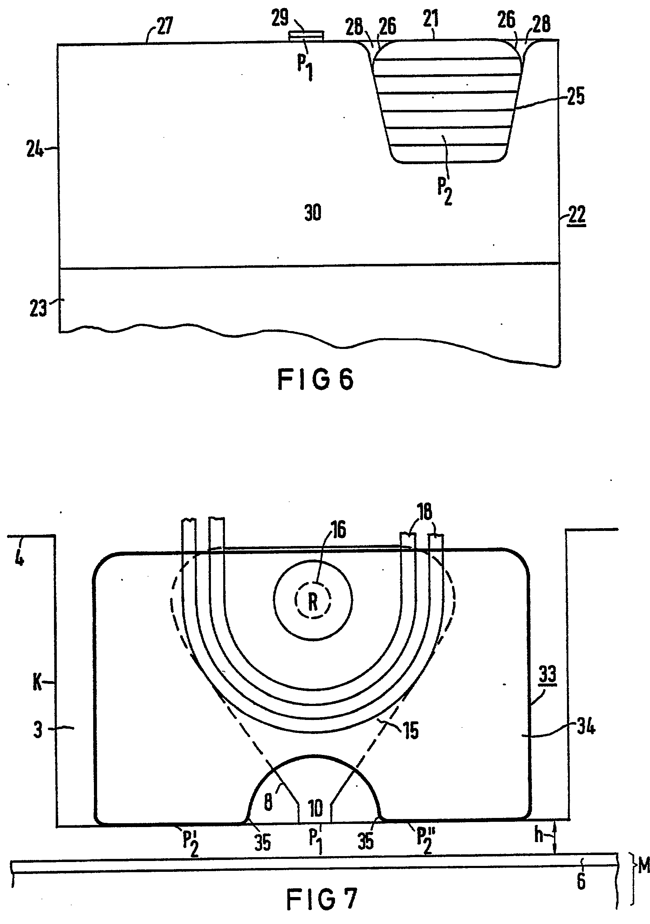

Ein weiterer Schnitt durch das den Magnetkopf 20 tragende Substrat 22 ist in Figur 6 zu entnehmen, wobei der Schnitt entsprechend Figur 4 gelegt ist. Diese Figur zeigt schematisch die unterschiedlich großen Polflächen des Haupt- und des versenkten Hilfspoles $P_1$ bzw. $P_2$ an der zu einer Flugkufe gestalteten Unterseite 30 des Substrates 22. Außerdem ist deutlich erkennbar, daß beim Hilfspol $P_2$ weitgehend scharfe Kanten 26 vermieden sind, so daß das Magnetfeld ohne störende Feldüberhöhungen aus dem Hilfspol austreten kann. Die Substratflachseite 27 ist dabei mittels Ausfüllungen, z.B. aus $Al_2O_3$, der Gräben 28 eingeebnet.

Aus Figur 7 ist ein weiterer Magnetkopf 33 in Figur 2 entsprechender Darstellung ersichtlich. Dieser Magnetkopf unterscheidet sich im wesentlichen von dem Kopf 2 nach Figur 2 dadurch, daß mit seinem äußeren Magnetschenkel 34 zwei Hilfspole $P'_2$ und $P''_2$ ausgebildet sind, wobei dieser Schenkel vorzugsweise zumindest weitgehend symmetrisch zu dem den Hauptpol $P_1$ bildenden, von ihm teilweise überlappten Magnetschenkel 8 angeordnet ist. Hierdurch werden vorteilhaft die Magnetfeldamplituden an den Hilfspolen etwa halbiert, so daß sich eine verbesserte magnetische Flußführung und ein entsprechend geringerer magnetischer Widerstand ergibt. Die Hilfspole $P'_2$ und $P''_2$ weisen vorteilhaft abgerundete Kanten 35 auf.

Selbstverständlich kann auch dieser Magnetkopf 33 entsprechend den Ausführungsformen nach dem Figuren 5 und 6 ausgebildet werden, wobei einer seiner Magnetschenkel, vorzugsweise der die Hilfspole bildende Schenkel 34, in das Substrat 4 bzw. 22 versenkt ist.

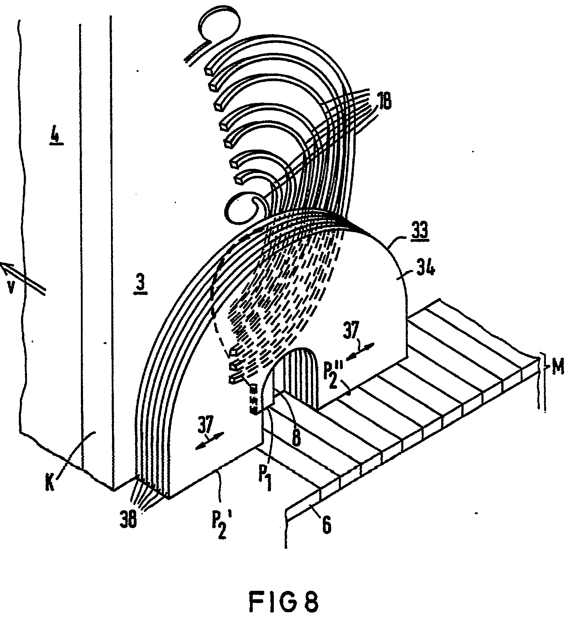

Figur 8 zeigt schematisch den in Figur 7 dargestellten Magnetkopf 33 in Schrägansicht. Wie in dieser Figur 8 zusätzlich durch gepfeilte Linien 37 angedeutet sein soll, sind die den einen Hauptpol und den einen oder die mehreren Hilfspole ausbildenden Magnetschenkel aller Magnetköpfe nach der Erfindung aus Magnetschichten aufgebaut, deren Vorzugsachsen ihrer Magnetisierung (in die leichte Richtung) parallel zur Oberfläche der Speicherschicht 6 des Aufzeichnungsmediums M und senkrecht zur Relativbewegung v ausgerichtet sind. In der Figur sind die die beiden Hilfspole $P_2'$ und $P_2''$ ausbildenden Magnetschichten des entsprechenden Magnetschenkels 34 mit 38 bezeichnet.

## Patentansprüche

1. Dünnfilm-Magnetkopf mit schichtweisem Aufbau auf einem nicht-magnetischen Substrat für ein Aufzeichnungsmedium, das eine magnetisierbare Speicherschicht enthält, in welche längs einer Spur Informationen durch senkrechte (vertikale) Magnetisierung einzuschreiben sind, welcher Magnetkopf
   – einen den magnetischen Fluß führenden magnetischen Leitkörper aufweist, dessen dem Aufzeichnungsmedium zugewandte, einen Haupt- und einen Hilfspol bildende Endstücke seiner Magnetschenkel mit vorbestimmtem Abstand nebeneinander auf einer Flachseite des Substrates angeordnet sind, deren Normale zumindest annähernd parallel zur Längsrichtung der Spur ausgerichtet ist,
   – und mit mindestens einer Schreib-/Lesespulenwicklung versehen ist, deren Leiterwindungen sich durch einen zwischen den Magnetschenkeln ausgebildeten Zwischenraum erstrecken, dadurch gekennzeichnet, daß als magnetischer Leitkörper (17) nur die sich teilweise überlappenden Magnetschenkel (8, 9; 21, 29; 34) vorgesehen sind, die in ihrer gemeinsamen Überlappungszone (15)
   – unter Ausbildung eines magnetischen Rückschlusses (R) in einem Teilbereich (16) aneinandergefügt und
   – außerhalb dieses Rückschlußbereiches (16) unter Ausbildung des Zwischenraumes (19) für die Stromleiter (18) beabstandet sind.

2. Magnetkopf nach Anspruch 1, dadurch gekennzeichnet, daß das Substrat (4; 22) mit einer Vertiefung (25) versehen ist, in welcher zumindest das einen Magnetpol ($P_2$ ; $P_2'$, $P_2''$) bildende Endstück (11) des einen Magnetschenkels (9; 21; 34) angeordnet ist.

3. Magnetkopf nach Anspruch 2, **dadurch gekennzeichnet**, daß zumindest das den Hilfspol ($P_2$; $P_2'$, $P_2''$) bildende Endstück (11) des einen Magnetschenkels (9; 21; 34) in der Vertiefung (25) des Substrates (4; 22) versenkt angeordnet ist.

4. Magnetkopf nach Anspruch 2 oder 3, **dadurch gekennzeichnet**, daß das Substrat (22) eine Isolationsschicht (24) enthält, welche mit der Vertiefung (25) versehen ist.

5. Magnetkopf nach Anspruch 4, **dadurch gekennzeichnet**, daß das Substrat (22) einen Körper (23) aus TiC-Al$_2$O$_3$ enthält, auf dem die Isolationsschicht (24) aus Al$_2$O$_3$ aufgebracht ist.

6. Magnetkopf nach einem der Ansprüche 2 bis 5, **dadurch gekennzeichnet**, daß die freie Seite des versenkt-angeordneten Magnetschenkels (21) zusammen mit der angrenzenden Flachseite (27) des Substrates (22) eine zumindest weitgehend ebene Fläche bildet, auf der die Leiterwindungen (18) der Schreib-/Lesespulenwicklung sowie der den magnetischen Rückschluß (R) bildende Teil des weiteren Magnetschenkels (29) anzuordnen sind.

7. Magnetkopf nach einem der Ansprüche 1 bis 6, **dadurch gekennzeichnet**, daß zumindest an dem Hilfspol ($P_2$; $P_2'$; $P_2''$) die Kanten (28, 35) des entsprechenden Magnetschenkels (9; 21; 34) abgerundet sind.

8. Magnetkopf nach einem der Ansprüche 1 bis 7, dadurch gekennzeichnet, daß die dem Aufzeichnungsmedium (M) zugewandte Fläche des Hilfspols ($P_2$; $P_2'$; $P_2''$) mindestens 10-mal größer als die entsprechende Fläche des Hauptpoles ($P_1$) ist.

9. Magnetkopf nach einem der Ansprüche 1 bis 8, dadurch gekennzeichnet, daß die Leiterwindungen (18) der Schreib-/Lesespulenwicklung den magnetischen Rückschlußbereich (16) zumindest teilweise umschließen.

10. Magnetkopf nach einem der Ansprüche 1 bis 9, dadurch gekennzeichnet, daß neben dem den Hauptpol ($P_1$) bildenden Magnetschenkel (8) der weitere Magnetschenkel (34) zwei Hilfspole ($P_2'$, $P_2''$) bildend ausgeführt ist, die zu beiden Seiten des Hauptpoles ($P_1$) liegen.

11. Magnetkopf nach Anspruch 10, dadurch gekennzeichnet, daß die beiden Hilfspole ($P_2'$, $P_2''$) zumindest weitgehend symmetrisch zu dem Hauptpol ($P_1$) liegend angeordnet sind.

12. Magnetkopf nach einem der Ansprüche 1 bis 11, dadurch gekennzeichnet, daß die Magnetschichten (38) des den Hauptpol ($P_1$) bildenden Magnetschenkels (8) und des den mindestens einen Hilfspol ($P_2$, $P_2'$, $P_2''$) bildenden Magnetschenkels (9, 21, 34) eine uniaxiale Anisotropie aufweisen, wobei die Vorzugsachsen (37) der Magnetisierung zumindest annähernd parallel zur Speicherschicht (6) des Aufzeichnungsmediums (M) und senkrecht zur relativen Bewegungsrichtung (v) orientiert sind.

## Claims

1. Thin film magnetic head with a layered construction on a non-magnetic substrate for a recording medium, which contains a magnetizable storage layer, into which information is to be written along a track by means of perpendicular (vertical) magnetization, the magnetic head
   – having a magnetic conductive body, conducting the magnetic flux, the end pieces of whose magnetic limbs, facing the recording medium and forming a main pole and an auxiliary pole, are arranged with predetermined spacing next to one another on a flat surface of the substrate, the normal of which is aligned at least approximately parallel to the longitudinal direction of the track,

— and being provided with at least one write/read coil winding, the conductor turns of which extend through an intermediate space constructed between the magnetic limbs, characterized in that only the partially overlapping magnetic limbs (8, 9; 21, 29; 34) are provided as the magnetic conductive body (17), which limbs in their common overlapping zone (15)
— are joined together with the formation of a magnetic return path (R) in a partial area (16) and
— are spaced outside this return path area (16) with the formation of the intermediate space (19) for the current conductors (18).

2. Magnetic head according to claim 1, characterized in that the substrate (4; 22) is provided with a depression (25) in which at least the end piece (11), forming a magnetic pole ($P_2$; $P'_2$, $P''_2$), of one magnetic limb (9; 21; 34) is arranged.

3. Magnetic head according to claim 2, characterized in that at least the end piece (11), forming the auxiliary pole ($P_2$; $P'_2$, $P''_2$), of the one magnetic limb (9; 21; 34) is arranged sunk into the depression (25) of the substrate (4; 22).

4. Magnetic head according to claim 2 or 3, characterized in that the substrate (22) contains an insulation layer (24) which is provided with the depression (25).

5. Magnetic head according to claim 4, characterized in that the substrate (22) contains a body (23) of $TiC-Al_2O_3$, onto which the insulation layer (24) of $Al_2O_3$ is applied.

6. Magnetic head according to one of claims 2 to 5, characterized in that the free side of the magnetic limb (21), arranged in a sunken manner, forms together with the adjoining flat surface (27) of the substrate (22) a surface which is at least to a large extent level, onto which the conductor turns (18) of the write/read coil winding and the part of the further magnetic limb (29), forming the magnetic return path (R), are to be arranged.

7. Magnetic head according to one of claims 1 to 6, characterized in that at least on the auxiliary pole ($P_2$; $P'_2$; $P''_2$) the edges (28, 35) of the corresponding magnetic limb (9; 21; 34) are rounded.

8. Magnetic head according to one of claims 1 to 7, characterized in that the area of the auxiliary pole ($P_2$; $P'_2$; $P''_2$), facing the recording medium (M), is at least 10 times larger than the corresponding area of the main pole ($P_1$).

9. Magnetic head according to one of claims 1 to 8, characterized in that the conductor turns (18) of the write/read coil winding enclose the magnetic return path area (16) at least partially.

10. Magnetic head according to one of claims 1 to 9, characterized in that in addition to the magnetic limb (8) forming the main pole ($P_1$), the further magnetic limb (34) is constructed so as to form two auxiliary poles ($P'_2$, $P''_2$), which lie to either side of the main pole ($P_1$).

11. Magnetic head according to claim 10, characterized in that the two auxiliary poles ($P'_2$, $P''_2$) are arranged so that they lie at least to a large extent symmetrically to the main pole ($P_1$).

12. Magnetic head according to one of claims 1 to 11, characterized in that the magnetic layers (38) of the magnetic limb (8) forming the main pole ($P_1$), and of the magnetic limb (9, 21, 34) forming at least one auxiliary pole ($P_2$, $P'_2$, $P''_2$), have an uniaxial anisotropy, the preferred axes (37) of magnetization being orientated at least approximately parallel to the storage layer (6) of the recording medium (M) and perpendicularly to the relative movement direction (v).

## Revendications

1. Tête magnétique à couche mince et à constitution stratifiée sur un substrat non-magnétique pour un milieu d'enregistrement qui comporte une couche à mémoire magnétisable dans laquelle des informations sont à inscrire le long d'une piste, par magnétisation perpendiculaire (verticale), laquelle tête magnétique
— comporte un corps conducteur magnétique qui guide le flux magnétique et dont les pièces d'extrémité de ses branches d'aimant, qui sont proches du milieu d'enregistrement, et qui forment un pôle principal et un pôle auxiliaire, sont disposées, avec une distance prédéterminée, l'une près de l'autre sur un côté plat du substrat, dont la normale est orientée, au moins approximativement, parallèlement à la direction longitudinale de la piste,
— et est pourvue d'au moins un enroulement d'écriture/lecture, dont les spires conductrices s'étendent à travers un espace intermédiaire formé entre les branches d'aimant, caractérisée par le fait que sont prévues, en tant que corps conducteur magnétique (17), seules les branches d'aimant (8, 9; 21, 29; 34) qui se chevauchent partiellement et qui, dans leur zone de chevauchement commune (15),
— sont aboutées dans une zone partielle (16), avec formation d'une culasse magnétique (R) et
— qui, en dehors de cette zone (16) de formation de la culasse, sont distantes entre elles, avec formation de l'espace intermédiaire (19) pour les conducteurs du courant (18).

2. Tête magnétique selon la revendication 1, caractérisée par le fait que le substrat (4; 22) est pourvu d'une cuvette (25) dans laquelle est disposée au moins la pièce d'extrémité (11) de l'une des branches d'aimant (9; 21; 34) qui forme un pôle magnétique ($P_2$; $P'_2$; $P''_2$).

3. Tête magnétique selon la revendication 2, caractérisée par le fait qu'au moins la pièce d'extrémité (11) de ladite branche d'aimant (9; 21; 34), qui forme le pôle auxiliaire ($P_2$; $P'_2$; $P''_2$), est noyée dans la cuvette (25) du substrat (4; 22).

4. Tête magnétique selon la revendication 2 ou 3, caractérisée par le fait que le substrat (22) comporte une couche isolante (24) qui est pourvue de la cuvette (25).

5. Tête magnétique selon la revendication 4, caractérisée par le fait que le substrat (22) comporte un corps (23) en $TiC-Al_2O_3$, sur lequel est déposée la couche isolante (23) en $Al_2O_3$.

6. Tête magnétique selon l'une des revendications 2 à 5, caractérisée par le fait que le côté libre de la branche d'aimant noyée (21), forme, avec le côté plat voisin (27), du substrat (22), une surface, au moins largement plane, sur laquelle sont à disposer les spires conductrices (18) de l'enroulement écriture/lecture, ainsi que la partie de l'autre branche d'aimant (29), qui forme la culasse magnétique (R).

7. Tête magnétique selon les revendications 1 à 6, caractérisée par le fait qu'au moins au pôle auxiliaire ($P_2$; $P'_2$; $P''_2$), les bords (28, 35) de la branche d'aimant correspondante (9; 21; 34) sont arrondis.

8. Tête magnétique selon l'une des revendications 1 à 7, caractérisée par le fait que la surface du pôle auxiliaire ($P_2$; $P'_2$; $P''_2$), qui est voisine du milieu d'enregistrement (M) est au moins 10 fois plus grande que la surface correspondante du pôle principal ($P_1$).

9. Tête magnétique selon l'une des revendications 1 à 8, caractérisée par le fait que les spires (18) du conducteur de l'enroulement d'écriture/lecture entourent, au moins partiellement la zone (16) de la culasse magnétique.

10. Tête magnétique selon l'une des revendications 1 à 9, caractérisée par le fait que près de la branche d'aimant (8) qui forme le pôle principal ($P_1$), l'autre branche d'aimant (34) est réalisée de manière à former deux pôles auxiliaires ($P'_2$, $P''_2$) qui sont situés de part et d'autre du pôle principal ($P_1$).

11. Tête magnétique selon la revendication 10, caractérisée par le fait que les deux pôles auxiliaires ($P'_2$, $P''_2$) sont disposées de manière à se situer, au moins largement, symétriquement par rapport au pôle principal ($P_1$).

12. Tête magnétique selon l'une des revendications 1 à 11, caractérisée par le fait que les couches magnétiques (38) de la branche d'aimant (8) qui forme le pôle principal ($P_1$), et de la branche d'aimant (9, 21, 34) qui forme au moins l'un des pôles auxiliaires ($P_2$; $P'_2$; $P''_2$), présentent une anisotropie uniaxiale, les axes préférentiels de la magnétisation étant orientés, au moins approximativement, parallèlement à la couche à mémoire (6) du milieu d'enregistrement (M) et perpendiculairement à la direction du déplacement relatif (v).

FIG 1

FIG 2

FIG 3

FIG 4

FIG 5

FIG 6

FIG 7

FIG 8